# EUROPEAN PATENT SPECIFICATION

(11) **EP 1 855 023 B1**
(45) Date of publication and mention of the grant of the patent: **26.11.2008**
(21) Application number: 07425271.9
(22) Date of filing: 09.05.2007
(51) Int. Cl.: F16D 55/22, B60K 17/04, F16H 31/00

(54) **Disk brake with a device for intermittently rotating the wheels of a vehicle**
Scheibenbremse mit einer Vorrichtung zum periodischen Drehen der Räder eines Fahrzeugs
Frein à disque avec un dispositif pour faire tourner de manière intermittente les roues d' un véhicule

(30) Priority: 10.05.2006 IT BS20060098
(43) Date of publication of application: 14.11.2007
(73) Proprietor: Gaia, Mario, 20060 Cassina De' Pecchi (Milano) (IT)
(72) Inventor: Gaia, Mario, 20060 Cassina De' Pecchi (Milano) (IT)
(74) Representative: Sangiacomo, Fulvia

(56) References cited:
- FR-A- 489 138
- GB-A- 1 390 858
- GB-A- 2 396 391

## Description

### Field of the Invention

This invention concerns in general the field of vehicles such as automobiles, motorcycles, etc., and refers in particular to their braking system, and specifically to disk brakes.

### State of the technology

A disk brake is usually made up of at least a metal disk with two contact faces, by at least a brake calliper holding at least a pair of brake pads and a mechanical or hydraulic control means to move said pads towards or away from the disk.

The disk is solidly connected to the wheel or to its rotation axle, the brake callipers are assembled, in a fixed or floating position, on a part of the non rotating structure supporting the wheel, and the brake pads, are pressed against the faces of the disk to create braking friction when operated by the relative means of control.

In any vehicle, the function of a brake is basically to slow down or brake, until it stops, the rotation of the wheel it is associated with, and also to park the vehicle.

Further, brakes are known (e.g. from GB 2 396 391) which have a first calliper and an additional, rotationally movable calliper which provides a servo braking force.

### Objectives and Summary of the Invention

The main objective of the invention is to propose a disk brake for wheels of vehicles capable of carrying out, in addition to the usual braking operation, also a driving action to cause or assist the rotation of the wheels to move a vehicle forward in stages in the case of an emergency, steep slopes, low adherence to the ground or other difficult conditions, always keeping the vehicle in a safe condition.

The objective therefore is to achieve the capacity to move the vehicle in conditions of low adherence or on steep slopes, in the same way as four wheel drive vehicles, even if at a low speed, without the vast increase in cost and above all energy consumption that characterizes four wheel drive vehicles.

Such an objective is achieved according to the invention with a brake for vehicles, comprising a turning disk connected to a wheel or its rotation axis and at least one primary brake calliper associated with said disk and connected to a non-turning part of the supporting structure of the wheel, and an additional brake calliper moveable at an angle to the primary brake calliper, characterised in that the primary brake calliper and the additional brake calliper are arranged at least to alternatively engage with the disk so that when one of them is not operating the other is operating and that the additional brake calliper is movable in a direction relative to the primary brake calliper when it, the additional calliper, is not operating and in the opposite direction when said additional brake calliper is in a non-operating position and the primary brake calliper is operating.

Therefore, and advantageously, by alternating the action of the primary calliper and the additional calliper against the disk it will be possible, by means of a movement of the second compared with the first, make the disk turn and with it the wheel at a certain angle every time to gradually move the vehicle forward, should it be found necessary, even if slowly. This, therefore, represents an auxiliary function a vehicle can take advantage of. Furthermore, the additional brake calliper can be given the task and used to improve or assist in the braking action of the primary brake calliper or also as a parking brake.

### Brief Description of the Drawings

Greater details of the invention will however become more evident in the following description made in reference to the enclosed diagrammatic drawings, in which:
Fig. 1 shows an example of a first example of a brake according to the invention; and
Figs. 2 and 3 shows other examples of further a brake according to the invention.

### Detailed Description of the Invention

As shown in these drawings, the brake proposed here comprises a disk 11 associated with a relative primary brake calliper 12 and provided with at least one additional brake calliper 13.

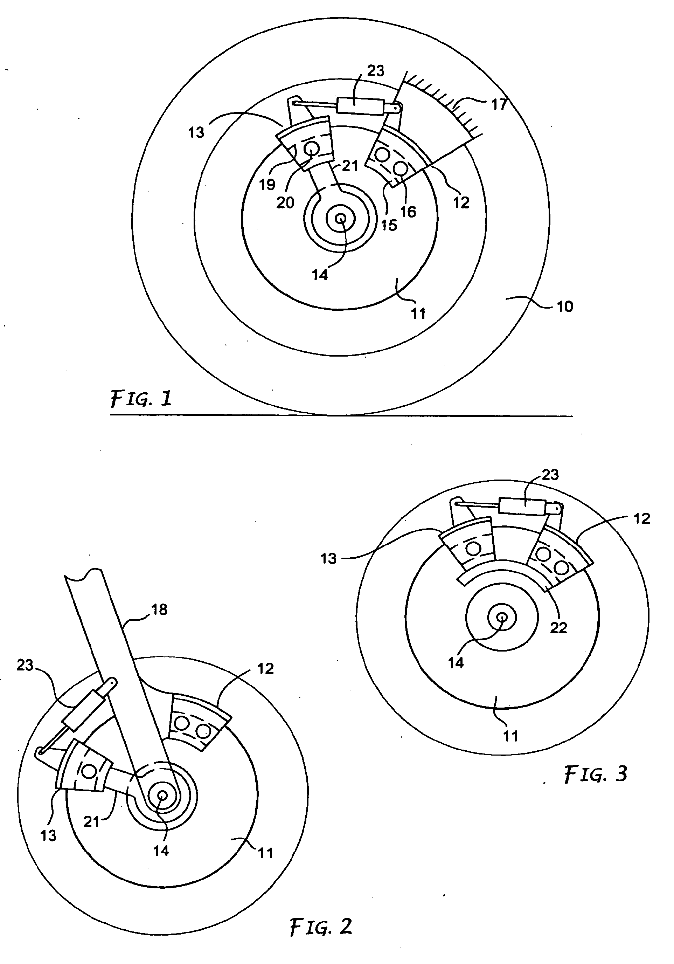

The disk 11, which can be made of cast iron, drilled, grooved or with smooth surfaces, is connected in the usual way to a respective wheel 10 to be braked or to its rotation axle 14. The primary brake calliper 12 holds, in the usual way, some brake pads 15 (dotted lines) facing the disk 11 and other components, usually pistons or cylinders 16, to move the pads towards or away from the disk. Said primary brake calliper 12 is however attached to a non-rotating supporting part of the wheel, which can be a fixed part of a vehicle, as generically indicated by 17 in Fig. 1, or made up of the wheel holder fork 18-Fig.2 - in the case of the motorcycle.

The additional brake calliper 13 is also equipped with brake pads 19 (dotted lines) with respective control pistons 20, but it moves in opposite directions to the primary brake calliper 12 along an approach and distancing trajectory from the latter.

The movement trajectory of said additional brake calliper 13 can be defined by any appropriate system. For example, the additional brake calliper 13 can be mounted on an arm 21 subject to angular movements around an axis coincident with the axis of the disk 11 as shown in Figs. 1 and 2. Otherwise, the additional brake calliper 13 can be coupled, by the interposition of bearings, rollers or by prismatic guides or similar, to a guide element 22 fixed to the primary brake calliper as shown in Fig. 3.

As an alternative, said guide element 22 can be an integral part of the additional brake calliper and moving in relation to the primary brake calliper.

The movements in both directions of the additional brake calliper can be achieved with an actuator 23 that can be electric, pneumatic or hydraulic. In the examples shown, the actuator 23 is an hydraulic cylinder which is attached on one side to the moving brake calliper 13 and on the other to the stationary brake calliper 12, as shown in Figs. 1 and 2, or to a non-rotating part of the wheel supporting structure, such as the wheel support fork 18, as shown in Fig. 2.

In the group described above, the primary brake calliper 12 is dedicated primarily to the braking operation independently from or in combination with additional brake calliper 13. Furthermore, the latter, if and when connected by a cable to the lever of the hand brake of a vehicle can also be used as a parking brake.

The primary brake calliper 12 and the additional brake calliper 13 are however managed also to be activated and deactivated alternately and in sequence to perform the function described in the objective of the invention.

Correspondingly, starting from the active position of the primary brake calliper 12 of each wheel it will be possible to activate the additional brake calliper 13, deactivate the primary brake calliper, move the additional brake calliper 13 angularly and with it the disk 11 to make the respective wheel 10 turn likewise, and to reactivate the primary brake calliper 12 prior to deactivating the additional brake calliper 13 to return it to its initial position. By repeating such a sequence it will then be possible to turn the wheels gradually and cause the vehicle to translate, that is both forwards and backwards, according to requirements depending on the direction of the movement of the additional brake calliper when it is in an active position.

It should be noted that the group described above can also be equipped with a sensor of the wheel rotation speed caused by the additional brake calliper which can delay the activation of the primary brake calliper 12 after deactivation of the additional brake calliper 13 allowing in this way the wheel to turn freely until the speed almost drops to zero. In addition, when the primary brake calliper 12 is inoperative, the additional brake calliper 13 may be used and moved forward and back several times in succession so as to interact with the brake disk 11 to provoke a propulsive thrust concurrent with the vehicle motion direction and so as to be inactive when its action in relation to the speed of the vehicle tends to cause the latter to slow down.

## Claims

1. Disk brake for vehicles such as motor vehicles, industrial vehicles, motorcycles and the like, comprising a turning brake disk (11) connected to a wheel (10) or to its rotation axle, at least one primary brake calliper (12) associated with said disk (11) and connected to a non-turning part of the wheel supporting structure (17, 18) and at least one additional brake calliper (13) moving angularly in relation to the primary brake calliper (12), **characterised in that** the primary brake calliper (12) and the additional brake calliper (13) are arranged at least to engage alternately with said disk (11) so that when one of them is inoperative the other is operating, and **in that** the additional brake calliper (13) can be activated and moved in one direction relative to the primary brake calliper (12) when the latter is inoperative and in an opposite direction when said additional brake calliper (13) in an inoperative position and the primary brake calliper (12) is operative, to cause a progressive angular rotation of the brake disk (11) and wheel (10) it is associated with.

2. Disk brake for vehicles such as motor vehicles, industrial vehicles, motorcycles and the like, comprising a turning brack disk (11) connected to a wheel (10) or to its rotation axle, at least one primary brake calliper (12) associated with said disk (11) and connected to a non-turning part of the wheel supporting structure (17, 18), and at least one additional brake calliper (13) moving angularly in relation to the primary brake calliper (12), **characterised in that** the additional brake calliper (13) can be activated and moved forward and backwards several times in succession to engage with the brake disk (11) when the primary brake calliper (12) is inoperative so as to provoke a propulsive thrust concurrent with the vehicle motion direction and so as to be inoperative when its action in relation to the speed of the vehicle tends to cause it to slow down.

3. Disk brake according to claim 1 or 2, in which said additional brake calliper (13) is attached to an arm (21) subject to angular movements around a rotation axis.

4. Disk brake according to claim 3, in which said arm (21) supporting the additional brake calliper (13) has the same rotation axis as the brake disk.

5. Disk brake according to claim 1 or 2, in which said additional brake calliper (13) is coupled to and moving on or with a guide element (22) in relation to the primary brake calliper (12).

6. Disk brake according to claim 5, in which said guide element (22) is coupled to the primary brake calliper (12) and the additional brake (22) calliper (13) moves along said guide element (22) with the interposition of bearings, rollers or prismatic guides.

7. Disk brake according to claim 5, in which said guide element (22) is attached to the additional brake calliper (13) and moves in relation to the primary brake calliper (12) with the interposition of bearings, rollers or prismatic guides.

8. Disk brake according to any of the previous claims, in which for its movements in relation to the primary brake calliper (12), the additional brake calliper (13) is attached to either an electric, pneumatic or hydraulic actuator (23).

9. Disk brake according to claim 8, in which said actuator (23) is connected on one side to the additional brake calliper (13) and on the other to the primary brake calliper (12).

10. Disk brake according to claim 8, in which said actuator (23) is connected to the additional brake calliper (13) and to a non-turning part of the supporting structure (17, 18) of the wheel (10) equipped with a brake.

11. Disk brake according to claim 1, including further a detector for the control of the wheel rotation speed caused by the additional brake calliper (13) an arranged so as to delay the activation of the primary brake calliper (12) following deactivation of the additional brake calliper (13) to allow the wheel (10) to turn freely until said speed is close to zero.

## Patentansprüche

1. Scheibenbremse für Fahrzeuge, wie z.B. Kraftfahrzeuge, Nutzfahrzeuge, Motorräder und Ähnliches, mit einer drehbaren Bremscheibe (11), die mit einem Rad (10) oder mit ihrer eigenen Drehachse verbunden ist, mit mindestens einem primären Bremssattel (12), der mit besagter Scheibe (11) verbunden und an einem nicht rotierenden Teil der tragenden Konstruktion (17, 18) des Rads befestigt ist, sowie mindenstens einem zusätzlichen, in Richtung des primären Bremssattels (12), winkelbeweglich gehaltenen Bremssattel (13), und zwar so, dass der primäre Bremssattel (12) und der zusätzliche Bremssattel (13) so angeordnet sind, dass sie mit besagter Scheibe im Wechsel tätig werden, sodass immer einer, wenn der jeweils andere von ihnen nicht aktiv ist, tätig ist, und zwar so, dass der zusätzliche Bremssattel (13) aktivierbar und in diejenige Richtung des primären Bremssattels (12) beweglich ist, wenn der primäre Bremssattel nicht aktiv ist, und in die entgegengesetzte Richtung, wenn besagter zusätzlicher Bremssattel (13) in nicht aktiver Position ist und der primäre Bremssattel (12) aktiv ist, um eine progressive Winkeldrehung der Bremsscheibe (11) und des mit ihr verbundenen Rads (10) zu bewirken.

2. Scheibenbremse für Fahrzeuge, wie z. B. Kraftfahrzeuge, Nutzfahrzeuge, Motorräder und Ähnliches, mit einer drehbaren Bremscheibe (11), die mit einem Rad (10) oder mit ihrer eigenen Drehachse verbunden ist, mit mindestens einem primären Bremssattel (12), der mit besagter Scheibe (11) verbunden und an einem nicht rotierenden Teil der tragenden Konstruktion (17, 18) des Rads befestigt ist, sowie mindenstens einem zusätzlichen, in Richtung des primären Bremssattels (12) winkelbeweglich gehaltenen Bremssattel (13), und zwar so, dass der zusätzliche Bremssattel (13) mehrfach hintereinander vor- und rückwärts aktivierbar und beweglich ist, um mit der Bremsscheibe (11) tätig zu werden, wenn der primäre Bremssattel (12) nicht aktiv ist, sodass ein Antriebsschub erzeugt wird, der nicht mit der Bewegungsrichtung des Fahrzeugs übereinstimmt und so, dass dieser nicht aktiv ist, wenn dessen Aktivität im Zusammenhang mit der Fahrzeuggeschwindigkeit zu einer Verlangsamung führen könnte.

3. Scheibenbremse gemäß dem Patentanspruch 1 oder 2, in der der zusätzliche Bremssattel (13) mit einem Arm (21) verbunden ist, der zu Winkelverschiebungen um eine Drehachse neigt.

4. Scheibenbremse gemäß dem Patentanspruch 3, in dem besagter Arm (21), der den zusatzlichen Bremssattel (13) trägt, dieselbe Drehachse der Bremsscheibe hat.

5. Scheibenbremse gemäß dem Patentanspruch 1 oder 2, in dem besagter zusätzlicher Bremssattel (13) auf oder mit einem Steuerungselement (22) gekoppelt und beweglich ist, und zwar parallel zum primären Bremssattel (12).

6. Scheibenbremse gemäß dem Patentanspruch 5, in dem besagtes Steuerungselement (22) mit dem primären Bremssattel (12) verbunden ist und der zusätzliche Bremssattel (13) durch die Einfügung von Polstern, Rollen oder Prismenführungen entlang besagtem Steuerungselement (22) beweglich ist.

7. Scheibenbremse gemäß dem Patentanspruch 5, in dem besagtes Steuerungselement (22) mit dem zusätzlichen Bremssattel (13) verbunden ist und im Gegensatz zum primären Bremssattel (12) durch Einfügung von Polstern, Rollen oder Prismenführungen beweglich ist.

8. Scheibenbremse gemäß einem beliebigen der oben genanneten Patentansprüche, in dem der zusätzliche Bremssattel (13), aufgrund seiner sich nach dem primären Bremssattel (12) richtenden Bewegungen, mit einem elektrischen, pneumatischen oder hydraulischen Antrieb verbunden ist.

9. Scheibenbremse gemäß dem Patentanspruch 8, in dem besagter Antrieb(23) einerseits am zusätzlichen Bremssattel (13) und andererseits am primären Bremssattel (12) angeschlossen ist.

10. Scheibenbremse gemäß dem Patentanspruch 8, in dem besagter Antrieb(23) am zusätzlichen Bremssattel (13) angeschlossen und an einem nicht drehenden Teil der tragenden Konstruktion (17,18) des Rads (10) mit einer Bremse versehen ist.

11. Scheibenbremse gemäß dem Patentanspruch 1, umfasst ausserdem einen Messfühler zur Überwachung der vom zusätzlichen Bremssattel (13) verursachten Drehgeschwindigkeit, der so angeordnet ist, dass dieser die Aktivierung des primären Bremssattels (12) verlangsamt, wenn der zusätzliche Bremssattel deaktiviert worden ist, um die ungehinderte Drehung des Rads (10) zu bewirken, bis besagte Geschwindigkeit ungefähr bei null liegt.

## Revendications

1. Frein à disque pour véhicules, tels que véhicules automobiles, véhicules industriels, motocycles et similaires, comprenant un disque de frein rotatif (11) relié à une roue (10) ou à son axe de rotation, au moins une pince de frein primaire (12) associée à ce disque (11) et reliée à une partie non rotative de la structure de support (17, 18) de la roue et au moins une pince de frein supplémentaire (13) mobile angulairement par rapport à la pince de frein primaire (12), il est **caractérisé par le fait que** la pince de frein primaire (12) et la pince de frein supplémentaire (13) sont disposées pour s'engager de manière alternative avec ce disque (11) et pour faire en sorte que, lorsqu'une de celles-ci est inopérante, l'autre soit opérante, et que la pince de frein supplémentaire (13) soit activable et mobile dans un sens par rapport à la pince de frein primaire (12) lorsque cette dernière est inopérante et dans le sens opposé, quand cette pince de frein supplémentaire (13) est en position inopérante et que la pince de frein primaire (12) est opérante, afin de provoquer une rotation angulaire progressive du disque de frein (11) et de la roue (10) à laquelle il est associé.

2. Frein à disque pour véhicules, tels véhicules automobiles, véhicules industriels, motocycles et similaires, comprenant un disque de frein rotatif (11) raccordé à une roue (10) ou à son axe de rotation, au moins une pince de frein primaire (12) associée à ce disque (11) et raccordée à une partie non rotative de la structure de support (17, 18) de la roue et au moins une pince de frein supplémentaire (13) mobile angulairement par rapport à la pince de frein primaire (12), il est **caractérisé par le fait que** la pince de frein supplémentaire (13) peut être actionnée et mobile en avant et en arrière plusieurs fois successivement pour s'engager avec le disque de frein (11) lorsque la pince de frein primaire (12) est inopérante de manière à provoquer une poussée propulsive concourante avec la direction de mouvement du véhicule et de manière à être inopérante lorsque son action par rapport à la vitesse du véhicule aurait tendance à provoquer son ralentissement.

3. Frein à disque selon la revendication 1 ou 2, dans lequel cette pince de frein supplémentaire (13) est bloquée par un bras (21) susceptible de déplacements angulaires autour d'un axe de rotation.

4. Frein à disque selon la revendication 3, dans lequel ce bras (21) portant la pince de frein supplémentaire (13) a le même axe de rotation que le disque de frein.

5. Frein à disque selon la revendication 1 ou 2, dans lequel cette pince de frein supplémentaire (13) est accouplée et mobile sur/avec un élément de guidage (22) par rapport à la pince de frein primaire (12).

6. Frein à disque selon la revendication 5, dans lequel cet élément de guidage (22) est lié à la pince de frein primaire (12) et la pince de frein supplémentaire (13) est mobile le long de cet élément de guidage (22) avec l'interposition de paliers, de roulements ou de guidages prismatiques.

7. Frein à disque selon la revendication 5, dans lequel cet élément de guidage (22) est lié à la pince de frein supplémentaire (13) et est mobile par rapport à la pince de frein primaire (12) avec l'interposition de paliers, de roulements ou de guidages prismatiques.

8. Frein à disque selon une des revendications précédentes, dans lequel la pince de frein supplémentaire (13) est liée à un actionneur (23) électrique, pneumatique ou hydraulique pour ses mouvements par rapport à la pince de frein primaire (12).

9. Frein à disque selon la revendication 8, dans lequel cet actionneur (23) est raccordé, d'un côté à la pince de frein supplémentaire (13) et de l'autre, à la pince de frein primaire (12).

10. Frein à disque selon la revendication 8, dans lequel cet actionneur (23) est raccordé à la pince de frein supplémentaire (13) et à une partie non rotative de la structure de support (17,18) de la roue (10) dotée de frein.

11. Frein à disque selon la revendication 1, comprenant également un détecteur de contrôle de la vitesse de rotation de la roue provoquée par la pince de frein supplémentaire (13) et disposé de manière à retarder l'activation de la pince de frein primaire (12) après la désactivation de la pince de frein supplémentaire (13) pour laisser tourner librement la roue (10) jusqu'à ce que cette vitesse s'approche de zéro.
